# EUROPÄISCHE PATENTSCHRIFT

(11) **EP 3 109 431 B1**
(45) Veröffentlichungstag und Bekanntmachung des Hinweises auf die Patenterteilung: **17.04.2019**
(21) Anmeldenummer: 16001363.7
(22) Anmeldetag: 16.06.2016
(51) Int. Cl.: F02B 29/04, F01P 3/20

(54) **KÜHLMITTELKREISLAUFVORRICHTUNG**
COOLANT CIRCUIT DEVICE
DISPOSITIF DE CIRCULATION D'AGENT DE REFROIDISSEMENT

(30) Priorität: 23.06.2015 DE 102015008035
(43) Veröffentlichungstag der Anmeldung: 28.12.2016
(73) Patentinhaber: Volkswagen AG, 38440 Wolfsburg (DE)
(72) Erfinder: Biener, Martin, 38173 Veltheim (DE); Egermann, Jan, 38518 Gifhorn (DE); Bürger, Ronny, 38448 Wolfsburg (DE); Epperlein, Thomas, 38100 Braunschweig (DE); Krzeminski, Jens, 38518 Gifhorn (DE)
(74) Vertreter: Zeitler Volpert Kandlbinder Patent- und Rechtsanwälte Partnerschaft mbB

(56) Entgegenhaltungen:
- WO-A1-2007/122345
- DE-A1-102004 060 658
- US-A- 4 517 929
- US-B1- 6 230 668

## Beschreibung

Die Erfindung betrifft eine Kühlmittelkreislaufvorrichtung gemäß dem Oberbegriff des Patentanspruchs 1.

Eine derartige Kühlmittelkreislaufvorrichtung dient dazu, einen Ladeluftkühler (Abk.: LLK, englisch intercooler) einer aufgeladenen Brennkraftmaschine mit einem Kühlmittel zu versorgen. Der Ladeluftkühler ist ein Wärmeübertrager, der im Ansaugtrakt der aufgeladenen Brennkraftmaschine die Temperatur der dem Motor zugeführten Luft verringert. Der Ladeluftkühler ist im Ansaugtrakt zwischen einem Verdichter (Verdichterrad eines Turboladers oder Kompressors) und einem Einlassventil eingebaut und führt einen Teil der Wärme ab, die durch die Verdichtung der Luft im Verdichter entsteht.

Im Betrieb wird von einer Kühlmittel-Umwälzpumpe ein Kühlmittel, z.B. Kühlwasser, in einem Kühlkreislauf mit Hin- und Rückführleitungen zwischen dem Ladeluftkühler und dem fahrzeugseitigen Kühler umgewälzt. Jedoch kann es zur Auskondensation von z.B. Luftfeuchtigkeit der Ansaugluft, von Feuchtigkeit eines Abgasrückführstromes einer Abgasrückführung oder eines Motor-Blow-By-Stromes und im schlimmsten Fall zu Versottungen oder Vereisungen im Ladeluftkühler kommen, wenn bei niedrigen Umgebungstemperaturen das Kühlmittel mit sehr geringer Temperatur in den Ladeluftkühler eintritt, z.B. wenn die Kühleraustrittstemperatur ca. 5K über der Umgebungstemperatur liegt.

Es ist bekannt, die Temperatur des Kühlmittels mit Hilfe eines stufenlos bzw. kontinuierlich regelbaren 3/2-Wegeventils zum Einstellen eines Kühlmittel-Mischverhältnisses zu regeln, um so einer Auskondensation von Luftfeuchtigkeit durch Anheben der Lufttemperatur im Ladeluftkühler entgegenzuwirken. Ferner sind bei direkten Ladeluftsystemen als alternative Maßnahmen Bypass-Schaltungen zur kompletten Umgehung des Ladeluftkühlers, Abdeckungen des Ladeluftkühlers oder interne Klappen zur Reduzierung der Größe wärmetauschender Flächen bekannt. Ein stufenlos bzw. kontinuierlich regelbares 3/2-Wegeventil stellt eine zufriedenstellende Lösung dar, allerdings bedarf ein derartiges 3/2-Wegenventil einer entsprechenden Ansteuerhardware im Motorsteuergerät. Ferner wird eine Lagerückmeldung sowie ein Kühlmittel-Temperatursensor zur Wassertemperaturregelung benötigt, um die sich deutlich ändernden Kühlmittel-Temperaturen dynamisch anpassen zu können.

Aus der DE 10 2004 060 658 A1 ist eine Kreislaufanordnung zur Kühlung von Ladeluft bekannt, bei der das Kühlmittel je nach Temperatur desselben vollständig durch einen Haupt-Kühlmittel-Kühler oder einen Bypass und wieder zurück zu einem Thermostaten geleitet wird. Alternativ kann eine Aufteilung in Teilströme durch den Haupt-Kühlmittel-Kühler und den Bypass erfolgen. Der Thermostat weist dabei einen minimalen Durchsatz für einen Pilotstrom auf, um zu garantieren, dass eine Information über die Temperatur des Kühlmittels schnell zu einem Aktuator gelangt.

Der Erfindung liegt die Aufgabe zugrunde, einen einfacheren Weg aufzuzeigen, wie einer Auskondensation von Luftfeuchtigkeit im Ladeluftkühler entgegengewirkt werden kann.

Diese Aufgabe wird erfindungsgemäß durch eine Kühlmittelkreislaufvorrichtung der o.g. Art mit den in Anspruch 1 gekennzeichneten Merkmalen gelöst. Vorteilhafte Ausgestaltungen der Erfindung sind in den weiteren Ansprüchen beschrieben.

Dazu ist es bei einer Kühlmittelkreislaufvorrichtung der o.g. Art erfindungsgemäß vorgesehen, dass ein Ventil-Bypass, der parallel zum Ventil geschaltet ist, ein Mindest-Kühlmittel-Mischverhältnis von im Wesentlichen größer Null bereitstellt.

Dies hat den Vorteil, dass die Kühlmittelkreislaufvorrichtung einen deutlich einfacheren Aufbau aufweisen kann, denn es ist nicht notwendig, den gesamten Bereich eines Kühlmittel-Mischverhältnisses von Null Vol.-% bis 100 Vol.-% abzudecken, um einer Auskondensation von Luftfeuchtigkeit im Ladeluftkühler durch Anheben einer Lufttemperatur im Ladeluftkühler entgegenzuwirken. Dabei wird unter dem Kühlmittel-Mischverhältnis das Verhältnis von einem Kühlmittelvolumenstrom, der von dem Kühler geliefert wird, zu dem zwischen dem Ladeluftkühler und dem Kühler zirkulierenden Kühlmittelvolumenstrom verstanden. Somit wird bei einem Kühlmittel-Mischverhältnis von 100 Vol.-% nur Kühlmittel von dem Kühler bezogen, während bei dem Mindest-Kühlmittel-Mischverhältnis lediglich das Mindestvolumen pro Zeiteinheit von dem Kühler bezogen wird. Unter einem Mindest-Kühlmittel-Mischverhältnis von im Wesentlichen größer Null wird dabei ein Mindest-Kühlmittel-Mischverhältnis verstanden, dessen Wert größer als der Wert fertigungsbedingter Leckageströme ist. Der Wert liegt somit oberhalb des Wertes von Pilotströmen, wie z.B. dem Pilotstrom des Ventils. Ferner wird durch die Erfindung die thermische Belastung des Ladeluftkühlers reduziert. Nachteilig ist eine große Wassertemperaturspreizung am Ladeluftkühler, da sie zu hohen thermischen Spannungen führt. Diese Spreizung entsteht derzeit, weil aufgrund der geringen Kühlmitteltemperatur bei kalten Umgebungstemperaturen einerseits und geringem Kühlbedarf aufgrund kleiner Motorlasten andererseits nur wenig Kühlmittel durch den Ladeluftkühler gepumpt bzw. die Kühlmittel-Zirkulation sogar ganz ausgesetzt wird, um die Ansaugluft nicht zu sehr abzukühlen. Durch die Zirkulation des Kühlmittels über einen Ventil-Bypass kann auch bei geringem Kühlleistungsbedarf ein hoher KühlmittelVolumenstrom eingestellt werden. Dadurch sinkt die Kühlmittel-Temperaturdifferenz über den Ladeluftkühler, und die Thermospannungen werden reduziert. Trotzdem kann eine deutlich über der Umgebungstemperatur liegende Ansauglufttemperatur eingestellt werden.

Gemäß einer Ausführungsform stellt der Ventil-Bypass ein Mindest-Kühlmittel-Mischverhältnis von 8 Vol.-% bis 20 Vol.-%, vorzugsweise von 10 Vol.-%, bereit. Es hat sich überraschenderweise herausgestellt, dass mit einem derartigen Mischverhältnis eine ausreichende Temperaturanhebung erreicht werden kann, um einer Auskondensation von Luftfeuchtigkeit im Ladeluftkühler entgegenzuwirken.

Gemäß einer weiteren Ausführungsform ist das Ventil ein 3/2-Wegeventil. Unter einem 3/2-Wegeventil wird ein Ventil mit drei Anschlüssen und zwei Ventilsitzen verstanden, wobei wechselseitig immer ein Ventilsitz geöffnet oder geschlossen bleibt. Dies vereinfacht die Kühlmittelkreislaufvorrichtung nochmals, da nur ein Ventil vorgesehen sein muss, um das Kühlmittel wahlweise durch den Kühler oder um den Kühler herum zu leiten.

Gemäß einer weiteren Ausführungsform ist das Ventil ein diskrete Schaltzustände aufweisendes Ventil. Damit unterscheidet sich das Ventil von einem Stetigventil, wie z.B. einem Proportionalventil, Regelventil oder Servoventil, wobei unter einem Stetigventil ein z.B. elektrisch ansteuerbares Wegeventil verstanden wird, das sich nicht diskret schalten (auf/zu) lässt, sondern einen stetigen Übergang der Schaltstellungen ermöglicht. Somit ist bei einem Stetigventil im Gegensatz zu einem Ventil mit diskreten Schaltzuständen der Volumenstrom eines Kühlmittels stufenlos einstellbar. Dies vereinfacht die Kühlmittelkreislaufvorrichtung nochmals, da keine entsprechende Ansteuerhardware im Motorsteuergerät nötig ist, sondern das Motorsteuergerät nur zwei Ausgangssignale zur Ansteuerung des Ventils bereitstellen muss, um das Ventil von der ersten Schaltstellung bzw. dem ersten Zustand in die zweite Schaltstellung bzw. den zweiten Zustand zu überführen.

Gemäß einer weiteren Ausführungsform stellt das Ventil in einem ersten Schaltzustand das Mindest-Kühlmittel-Mischverhältnis und in einem zweiten Schaltzustand ein Maximal-Kühlmittel-Mischverhältnis ein. Das Mindest-Kühlmittel-Mischverhältnis beträgt z.B. 8 Vol.-% bis 20 Vol.-%, vorzugsweise 10 Vol.-%, während das Maximal-Kühlmittel-Mischverhältnis 100 Vol.-% beträgt. So kann ein Ventil mit einem besonders einfachen Aufbau verwendet werden, und es ist z.B. keine Lagerückmeldung erforderlich.

Gemäß einer weiteren Ausführungsform ist der Ventil-Bypass in das Ventil integriert. Somit ist das Ventil mit dem Ventil-Bypass einstückig ausgebildet. Es ist somit nur ein Bauteil während der Fertigung zu montieren, eine Montage von Verbindungsleitungen zum Bilden des Ventil-Bypasses entfällt.

Gemäß einer weiteren Ausführungsform ist der Ventil-Bypass dem Ventil zugeordnet. Somit ist der Ventil-Bypass durch Anschluss von Verbindungsleitungen an Anschlüsse des Ventils gebildet. So können standardisierte Ventile verwendet werden.

Gemäß einer weiteren Ausführungsform ist das Ventil ein Magnetventil. So kann ein Ventil mit einem einfachen Aufbau verwendet werden, das zudem besonders einfach anzusteuern ist. Somit vereinfacht sich die Kühlmittelkreislaufvorrichtung nochmals. Alternativ kann das Ventil als Pneumatik-Ventil ausgebildet sein, oder wird das Ventil durch einen Thermostaten oder auch eine Gedächtnisfeder, z.B. aus einer Formgedächtnislegierung (Memory-Metall), betätigt.

Ferner gehören zur Erfindung ein Ventil für eine derartige Kühlmittelkreislaufvorrichtung, insbesondere ein Ventil mit einem integrierten Ventil-Bypass, sowie ein Kraftfahrzeug mit einer aufgeladenen Brennkraftmaschine und einer derartigen Kühlmittelkreislaufvorrichtung.

Die Erfindung wird im Folgenden anhand der Zeichnung näher erläutert. Diese zeigt in
- Fig. 1: in schematischer Darstellung ein erstes Ausführungsbeispiel einer erfindungsgemäßen Kühlmittelkreislaufvorrichtung; und
- Fig. 2: in schematischer Darstellung ein zweites Ausführungsbeispiel einer erfindungsgemäßen Kühlmittelkreislaufvorrichtung.

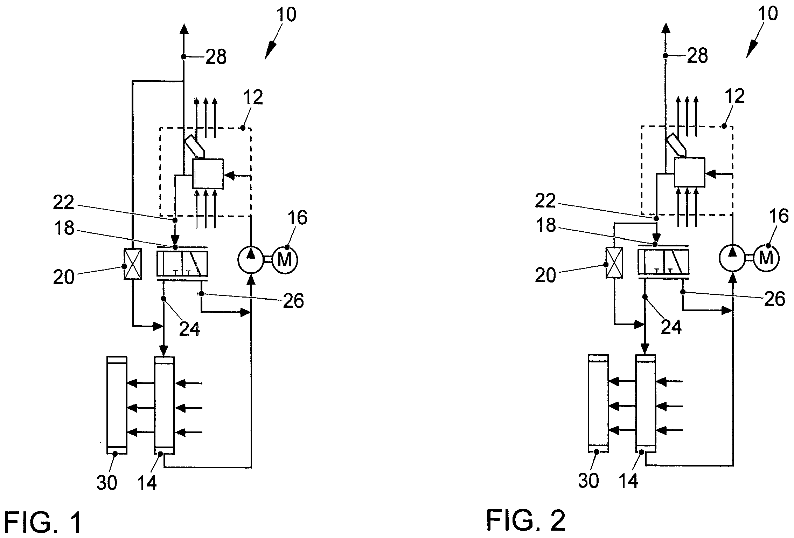

Die Figuren 1 und 2 zeigen eine Kühlmittelkreislaufvorrichtung 10 für einen Ladeluftkühler 12 einer aufgeladenen Brennkraftmaschine eines Kraftfahrzeugs, wie z.B. eines PKWs. Bei der aufgeladenen Brennkraftmaschine kann es sich um einen Otto- oder Dieselmotor handeln, der mittels eines Verdichters, aufgeladen ist. Der Verdichter kann Teil eines Turboladers, z.B. eines Abgasturboladers sein, oder es handelt sich um einen Kompressor.

Der Ladeluftkühler 12 ist ein Wärmetauscher und dient dazu, die aufgeladene Brennkraftmaschine mit einem Kühlmittel, wie z.B. Kühlwasser, zu versorgen, damit der Ladeluftkühler 12 durch das Kühlmittel einen Teil der Wärme abführen kann, die durch die Verdichtung der Luft im Verdichter entsteht. Der Ladeluftkühler 12 ist im Ansaugtrakt zwischen dem Verdichter (Verdichterrad eines Turboladers oder Kompressors) und einem Einlassventil bzw. den Einlassventilen der Brennkraftmaschine eingebaut.

Die Kühlmittelkreislaufvorrichtung 10 weist ferner einen Kühler 14, eine Kühlmittel-Umwälzpumpe 16 und ein Ventil 18 auf.

Mit der Kühlmittel-Umwälzpumpe 16 kann ein Kühlmittel von dem Kühler 14 durch entsprechende Verbindungsleitungen zu dem Ladeluftkühler 12 und wieder zurück gefördert werden. Der Kühler 14 kann ein Fahrzeugkühler sein, der im Frontend-Bereich des Kraftfahrzeugs angeordnet und der einem Motorkühler 30 in Luftströmungsrichtung nachgeschaltet ist. Die Kühlmittelkreislaufvorrichtung 10 gemäß dem vorliegenden Ausführungsbeispiel ist somit Teil einer indirekten Ladeluftkühlung, bei der Luft zuerst ein Kühlmittel eines Motorkühlers 30 und dann das Kühlmittel der Ladeluftkühlung kühlt. Die Kühlmittelkreislaufvorrichtung 10 weist somit einen Niedertemperatur- oder NT-Kühlmittelkreislauf auf. Im Gegensatz dazu wird bei einer direkten Ladeluftkühlung das Kühlmittel der Ladeluftkühlung direkt von der Umgebungsluft gekühlt.

Das Ventil 18 ist dazu ausgebildet, ein Kühlmittel-Mischverhältnis zur Temperatureinstellung zu verändern, um bei niedrigen Umgebungstemperaturen durch Anheben einer Lufttemperatur im Ladeluftkühler 12 einer Auskondensation von Luftfeuchtigkeit entgegenzuwirken.

Das Ventil 18 ist im vorliegenden Ausführungsbeispiel ein 3/2-Wegeventil, das drei Anschlüsse und zwei diskrete Schaltzustände aufweist. Das Ventil 18 weist einen Eingangsanschluss 22 auf, der kühlmittelführend über eine Verbindungsleitung mit dem Ladeluftkühler 12 verbunden ist. Ferner weist das Ventil 18 zwei Ausgangsanschlüsse 24, 26 auf, von denen ein erster Ausgangsanschluss 24 mit dem Kühler 14 kühlmittelführend über eine Verbindungsleitung verbunden ist, wobei der Kühler 14 über eine weitere Verbindungsleitung mit der Kühlmittel-Umwälzpumpe 16 kühlmittelführend verbunden ist. Die Kühlmittel-Umwälzpumpe 16 wiederum ist über eine weitere Verbindungsleitung mit dem Ladeluftkühler 12 kühlmittelführend verbunden. Somit kann, wenn sich das Ventil 18 in einem ersten Schaltzustand der beiden diskreten Schaltzustände befindet, Kühlmittel, das durch den Eingangsanschluss 22 in das Ventil 18 und dann aus dem ersten Ausgangsanschluss 24 strömt, von der Kühlmittel-Umwälzpumpe 16 im Kreis über den Kühler 14 gefördert werden.

Ein zweiter Ausgangsanschluss 26 des Ventils 18 ist über eine weitere Verbindungsleitung mit der Kühlmittel-Umwälzpumpe 16 kühlmittelführend verbunden. Somit kann, wenn sich das Ventil 18 in dem zweiten diskreten Schaltzustand befindet, Kühlmittel, das durch den Eingangsanschluss 22 in das Ventil 18 und aus dem zweiten Ausgangsanschluss 26 strömt, von der Kühlmittel-Umwälzpumpe 16 im Kreis gefördert werden, ohne allerdings von dem Kühler 14 abgekühlt zu werden.

Des Weiteren ist ein Ventil-Bypass 20 vorgesehen ist, der parallel zum Ventil 18 geschaltet ist. Die Figur 1 zeigt, dass der Ventil-Bypass 20 in das Ventil 18 integriert sein kann, so dass das Ventil 18 mit dem Ventil-Bypass 20 einstückig ein Bauteil bildend ausgebildet ist, oder der Ventil-Bypass 20 wird durch eine Bypass-Leitung gebildet, die an einer Entlüftungsleitung 28 des Ladeluftkühlers 12 und den ersten Ausgangsanschluss 24 des Ventil 18 angeschlossen und so dem Ventil 18 zugeordnet ist. Abweichend vom vorliegenden Ausführungsbeispiel kann - wie in Figur 2 dargestellt - der Bypass 20 nur eine direkte Umgehung des Ventils 18 darstellen und z.B. auch unmittelbar vor und nach dem Ventil 18 mit den Anschlüssen 22 und 24 verbunden angeordnet sein.

Der Ventil-Bypass 20 stellt ein Mindest-Kühlmittel-Mischverhältnis, das größer Null und größer als ein Pilotstrom des Ventils 18 ist. Das Mindest-Kühlmittel-Mischverhältnis kann z.B. im Bereich von 8 Vol.-% bis 20 Vol.-% liegen. Im vorliegenden Ausführungsbeispiel beträgt das Mindest-Kühlmittel-Mischverhältnis 10 Vol.-%. Somit wird durch das Ventil 18 im ersten Schaltzustand ein Maximal-Kühlmittel-Mischverhältnis von 100 Vol.-% und im zweiten Schaltzustand das Mindest-Kühlmittel-Mischverhältnis eingestellt, denn im ersten Schaltzustand des Ventils 18 wird das Kühlmittel ausschließlich, d.h. zu 100 Vol.-%, durch den Kühler 14 geleitet. In diesem Fall addieren sich die durch den ersten Ausgangsanschluss 24 und den Ventil-Bypass 20 strömenden Kühlmittelteilströme.

Wenn sich also das Ventil 18 im ersten Schaltzustand befindet, wird eine maximale Kühlwirkung erreicht und damit Luft durch den Ladeluftkühler 12 maximal abgekühlt, um so die Leistung der Brennkraftmaschine zu maximieren, z.B. bei hohen Umgebungstemperaturen, bei denen keine Gefahr eines Auskondensierens von Luftfeuchtigkeit im Ladeluftkühler 12 besteht.

Wenn sich hingegen das Ventil 18 im zweiten Schaltzustand befindet, strömt ein Kühlmittelteilstrom nur durch den Ventil-Bypass 20 zu dem Kühler 14, während der andere, durch den zweiten Ausgangsanschluss 26 geleitete Kühlmittelteilstrom an dem Kühler 14 vorbei direkt zu der Kühlmittel-Umwälzpumpe 16 geleitet wird. Somit ist eine reduzierte Kühlwirkung gegeben, die eine Anhebung der Lufttemperatur im Ladeluftkühler 12 bewirkt und damit einer Auskondensation von Luftfeuchtigkeit im Ladeluftkühler 12 entgegenwirkt, z.B. bei niedrigen Umgebungstemperaturen nahe dem Gefrierpunkt, bei denen die Gefahr eines Auskondensierens von Luftfeuchtigkeit im Ladeluftkühler 12 besteht. Dies wird im Wesentlichen dadurch erreicht, dass sich durch die erfindungsgemäße Aufteilung der Volumenströme eine Mischtemperatur im Kühlmittel einstellt, die deutlich oberhalb des Gefrierpunktes und auch unterhalb des Taupunktes der Feuchte in der Ansaugluft liegt. Dadurch können an keiner Stelle des Ladeluftkühlers solche nachteiligen Effekte wie Eisbildung und/oder Kondensatbildung auftreten, und die dadurch gleichzeitig erreichte Verringerung der Kühlmittel-Temperaturspreizung am Ladeluftkühler reduziert die Thermospannungen.

Somit kann auf Erfassen entsprechend kritischer Temperaturen hin mit einem derartigen, einfach anzusteuernden, diskreten 3/2-Wegeventil mit integriertem oder zugeordnetem Ventil-Bypass 20 durch Wechsel von dem zweiten Schaltzustand in den ersten Schaltzustand einer Auskondensation von Luftfeuchtigkeit im Ladeluftkühler 12 wirksam entgegenwirkt werden. So können bei Schwach- oder Teillast der Brennkraftmaschine höhere Saugrohrtemperaturen erreicht werden, was den Kohlendioxidausstoß vermindert.

### BEZUGSZEICHENLISTE

- 10: Kühlmittelkreislaufvorrichtung
- 12: Ladeluftkühler
- 14: Kühler
- 16: Kühlmittel-Umwälzpumpe
- 18: Ventil
- 20: Ventil-Bypass
- 22: Eingangsanschluss
- 24: erster Ausgangsanschluss
- 26: zweiter Ausgangsanschluss
- 28: Entlüftungsleitung
- 30: Motorkühler

## Patentansprüche

1. Kühlmittelkreislaufvorrichtung (10) mit einem Ladeluftkühler (12), einem Kühler (14), einer Kühlmittel-Umwälzpumpe (16) und einem Ventil (18), wobei mit der Kühlmittel-Umwälzpumpe (16) ein Kühlmittel von dem Kühler (14) zu dem Ladeluftkühler (12) und zurück förderbar ist, wobei das Ventil (18) einen ersten Ausgangsanschluss (24) zum Verbinden mit dem Kühler (14) und einen zweiten Ausgangsanschluss (26) zum Umgehen des Kühlers (14) aufweist, so dass mit dem Ventil (18) ein Kühlmittel-Mischverhältnis eines Kühlmittels zur Temperatureinstellung einer Lufttemperatur im Ladeluftkühler (12) veränderbar ist, wobei das Kühlmittel-Mischverhältnis das Verhältnis von dem Kühlmittelvolumenstrom, der durch den Kühler (14) fließt, zu dem gesamten zirkulierenden Kühlmittelvolumenstrom darstellt, und wobei ein Ventil-Bypass (20) vorgesehen ist, der parallel zum Ventil (18) geschaltet ist, der eine direkte Verbindung zwischen dem Ladeluftkühler (12) und dem Kühler (14) ausbildet und ein Mindest-Kühlmittel-Mischverhältnis von größer Null bereitstellt,
**dadurch gekennzeichnet, dass** der Ladeluftkühler (12) derart angeordnet ist, dass der gesamte zirkulierende Kühlmittelvolumenstrom durch ihn hindurch fließt.

2. Kühlmittelkreislaufvorrichtung (10) nach Anspruch 1, **dadurch gekennzeichnet, dass** der Ventil-Bypass (20) ein Mindest-Kühlmittel-Mischverhältnis von 8 Vol.-% bis 20 Vol.-%, vorzugsweise von 10 Vol.-%, bereitstellt.

3. Kühlmittelkreislaufvorrichtung (10) nach Anspruch 1 oder 2, **dadurch gekennzeichnet, dass** das Ventil (18) ein 3/2-Wegeventil ist.

4. Kühlmittelkreislaufvorrichtung (10) nach Anspruch 1, 2 oder 3, **dadurch gekennzeichnet, dass** das Ventil (18) ein zwei diskrete Schaltzustände aufweisendes Ventil ist.

5. Kühlmittelkreislaufvorrichtung (10) nach Anspruch 4, **dadurch gekennzeichnet, dass** das Ventil (18) in dem ersten Schaltzustand das Mindest-Kühlmittel-Mischverhältnis und in dem zweiten Schaltzustand ein Maximal-Kühlmittel-Mischverhältnis bereitstellt.

6. Kühlmittelkreislaufvorrichtung (10) nach mindestens einem der vorhergehenden Ansprüche, **dadurch gekennzeichnet, dass** der Ventil-Bypass (20) mit dem Ventil (18) einstückig ausgebildet ist.

7. Kühlmittelkreislaufvorrichtung (10) nach mindestens einem der vorhergehenden Ansprüche 1 bis 5, **dadurch gekennzeichnet, dass** der Ventil-Bypass (20) dem Ventil (18) zugeordnet ist.

8. Kühlmittelkreislaufvorrichtung (10) nach mindestens einem der vorhergehenden Ansprüche, **dadurch gekennzeichnet, dass** das Ventil (18) ein Magnetventil ist.

9. Kraftfahrzeug mit einer aufgeladenen Brennkraftmaschine und einer Kühlmittelkreislaufvorrichtung (10) nach einem der vorhergehenden Ansprüche 1 bis 8.

## Claims

1. Coolant circuit device (10) with a charge-air cooler (12), a cooler (14), a coolant circulating pump (16) and a valve (18), wherein with the coolant circulating pump (16) a coolant can be pumped from the cooler (14) to the charge-air cooler (12) and back, wherein the valve (18) has a first outlet connection (24) for connecting to the cooler (14) and a second output connection (26) for bypassing the cooler (14), so that with the valve (18) a coolant mixing ratio of a coolant is variable for the temperature setting of an air temperature in the charge-air cooler (12), wherein the coolant mixing ratio represents the ratio of the coolant volumetric flow that flows through the cooler (14) to the overall circulating coolant volumetric flow, and wherein a valve bypass (20), connected parallel to the valve (18), is provided, forming a direct connection between the charge-air cooler (12) and the cooler (14) and providing a minimum coolant mixing ratio of greater than zero, **characterized in that** the charge-air cooler (12) is - arranged in such a way that the entire circulating coolant volumetric flow flows through it.

2. Coolant circuit device (10) according to Claim 1, **characterized in that** the valve bypass (20) provides a minimum coolant mixing ratio of 8% by volume to 20% by volume, preferably of 10% by volume.

3. Coolant circuit device (10) according to Claim 1 or 2, **characterized in that** the valve (18) is a 3/2-way valve.

4. Coolant circuit device (10) according to Claim 1, 2 or 3, **characterized in that** the valve (18) is a valve having two discrete switching states.

5. Coolant circuit device (10) according to Claim 4, **characterized in that** the valve (18) in the first switching state provides the minimum cooling mixing ratio and in the second switching state provides a maximum coolant mixing ratio.

6. Coolant circuit device (10) according to at least one of the preceding claims, **characterized in that** the valve bypass (20) is formed in one piece with the valve (18).

7. Coolant circuit device (10) according to at least one of the preceding Claims 1 to 5, **characterized in that** the valve bypass (20) is assigned to the valve (18).

8. Coolant circuit device (10) according to at least one of the preceding claims, **characterized in that** the valve (18) is a solenoid valve.

9. Motor vehicle with a supercharged internal combustion engine and a coolant circuit device (10) according to one of the preceding Claims 1 to 8.

## Revendications

1. Dispositif de circulation d'agent de refroidissement (10) doté d'un refroidisseur d'air de suralimentation (12), d'un refroidisseur (14), d'une pompe de recirculation d'agent de refroidissement (16) et d'une soupape (18), dans lequel un agent de refroidissement peut être transporté du refroidisseur (14) au refroidisseur d'air de suralimentation (12) et retour avec la pompe de recirculation d'agent de refroidissement (16), dans lequel la soupape (18) présente un premier raccord de sortie (24) pour raccorder le refroidisseur (14) et un second raccord de sortie (26) pour contourner le refroidisseur (14), de telle manière qu'avec la soupape (18) un rapport de mélange d'agent de refroidissement d'un agent de refroidissement puisse être modifié pour le réglage de la température d'une température d'air dans le refroidisseur d'air de suralimentation (12), dans lequel le rapport de mélange d'agent de refroidissement représente le rapport du courant volumique d'agent de refroidissement, qui s'écoule à travers le refroidisseur (14), au courant volumique d'agent de refroidissement total en circulation, et dans lequel il est prévu une dérivation à soupape (20), qui est montée en parallèle sur la soupape (18), qui forme une liaison directe entre le refroidisseur d'air de suralimentation (12) et le refroidisseur (14) et qui fournit un rapport de mélange d'agent de refroidissement minimal supérieur à zéro, **caractérisé en ce que** le refroidisseur d'air de suralimentation (12) est disposé de telle manière que le courant volumique d'agent de refroidissement total en circulation s'écoule à travers lui.

2. Dispositif de circulation d'agent de refroidissement (10) selon la revendication 1, **caractérisé en ce que** la dérivation à soupape (20) fournit un rapport de mélange d'agent de refroidissement minimal de 8 % en volume à 20 % en volume, de préférence de 10 % en volume.

3. Dispositif de circulation d'agent de refroidissement (10) selon une revendication 1 ou 2, **caractérisé en ce que** la soupape (18) est une soupape à 3/2 voies.

4. Dispositif de circulation d'agent de refroidissement (10) selon une revendication 1, 2 ou 3, **caractérisé en ce que** la soupape (18) est une soupape présentant deux états de commutation discrets.

5. Dispositif de circulation d'agent de refroidissement (10) selon la revendication 4, **caractérisé en ce que** la soupape (18) fournit dans le premier état de commutation le rapport de mélange d'agent de refroidissement minimal et dans le second état de commutation un rapport de mélange d'agent de refroidissement maximal.

6. Dispositif de circulation d'agent de refroidissement (10) selon au moins une des revendications précédentes, **caractérisé en ce que** la dérivation à soupape (20) est formée d'une seule pièce avec la soupape (18).

7. Dispositif de circulation d'agent de refroidissement (10) selon au moins une des revendications précédentes 1 à 5, **caractérisé en ce que** la dérivation à soupape (20) est associée à la soupape (18) .

8. Dispositif de circulation d'agent de refroidissement (10) selon au moins une des revendications précédentes, **caractérisé en ce que** la soupape (18) est une soupape magnétique.

9. Véhicule automobile doté d'un moteur à combustion interne suralimenté et d'un dispositif de circulation d'agent de refroidissement (10) selon l'une quelconque des revendications précédentes 1 à 8.
